# EUROPEAN PATENT APPLICATION

(11) **EP 4 475 308 A1**
(43) Date of publication of application: **11.12.2024**
(21) Application number: 23921612.0
(22) Date of filing: 24.11.2023
(51) Int. Cl.: H01M 50/271, H01M 50/383, H01M 50/211, H01M 50/249

(54) **BATTERY PACK AND VEHICLE COMPRISING SAME**

(30) Priority: 28.04.2023 KR 20230056234; 13.10.2023 KR 20230137151
(71) Applicant: LG Energy Solution, Ltd., Seoul 07335 (KR)
(72) Inventor: KIM, Kwang-Mo, Yuseong-Gu, Daejeon 34122 (KR); JUNG, Hye-Mi, Yuseong-gu, Daejeon 34122 (KR); YOON, Young-II, Yuseong-gu, Daejeon 34122 (KR)
(74) Representative: Plasseraud IP
(86) International application number: PCT/KR2023/019157
(87) International publication number: WO 2024/225548

(57) **Abstract**

The present disclosure relates to a battery pack including: a plurality of battery cells; a pack tray having an open top and configured to accommodate the plurality of battery cells; a pack lid configured to cover the open top of the pack tray; and a reinforcement member coupled to the pack lid and configured to suppress deformation of the pack lid.

## Description

### TECHNICAL FIELD

The present disclosure relates to a battery pack and a vehicle including the same.

The present application claims priority to Korean Patent Application No. 10-2023-0056234 filed on April 28, 2023 in the Republic of Korea, the disclosures of which are incorporated herein by reference.

The present application claims priority to Korean Patent Application No. 10-2023-0137151 filed on October 13, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of a primary advantage of dramatically reducing the use of fossil fuels and another advantage of not generating by-products resulting from energy use.

Current secondary batteries widely used include lithium-ion batteries, lithiumpolymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, if an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, a common method for configuring a battery pack by connecting a plurality of battery cells in series/parallel is to preferentially configure a battery module including at least one battery cell and then add other elements using the at least one battery module, thereby configuring a battery pack or battery rack. Alternatively, recently, a cell-to-pack-type battery pack in which a plurality of battery cells is stored directly in a pack housing or the like, without modularizing the plurality of battery cells, has also been manufactured.

If a thermal event such as thermal runaway occurs inside the battery pack, gas may be ejected from the battery cell contained therein, and such gas may include flame or the like. In addition, if a situation such as thermal runaway of a specific battery module occurs in a battery pack containing multiple battery modules, it is likely to spread to other battery modules. If the thermal propagation between the battery modules fails to be properly controlled, it is very dangerous because it may cause fire or explosion of the entire battery pack.

Moreover, in the conventional battery pack, when thermal runaway occurs inside the battery pack, venting gas or the like moves through the space between a pack lid provided at the top of the battery module and the battery module to be discharged to the outside. However, if a specific portion of the pack lid is deformed outward by high-temperature venting gas or sparks, other surrounding portions are deformed inward, failing to secure a venting path. As a result, venting gas, heat, sparks, and the like are more likely to randomly transfer to adjacent battery cells or battery modules, instead of dispersing evenly.

Therefore, there is a need for a structure, when a thermal event occurs in the battery module or battery cell, to prevent the pack lid from being thermally deformed by high-temperature venting gas or sparks, thereby minimizing heat propagation inside the battery pack.

In addition, to this end, technology is required to secure a venting path for effectively discharging venting gas or the like to the outside of the battery pack when a thermal event occurs in the battery module or battery cell.

### DISCLOSURE

### Technical Problem

The present disclosure has been designed to solve the problems of the related art, and therefore the present disclosure is directed to providing a battery pack capable of ensuring safety and reliability when a thermal event occurs in a battery cell or battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: a plurality of battery cells; a pack tray having an open top and configured to accommodate the plurality of battery cells; a pack lid configured to cover the open top of the pack tray; and a reinforcement member coupled to the pack lid and configured to suppress deformation of the pack lid.

A venting path may be formed between the pack lid and the battery cells to allow venting gas generated from the battery cell to flow therethrough, and the reinforcement member may be configured to maintain the height of the venting path.

The reinforcement member may be made of a material with a lower thermal expansivity than the pack lid.

The reinforcement member may be configured to extend long in the stacking direction of the plurality of battery cells.

A plurality of reinforcement members may be provided to be spaced a predetermined distance apart from each other in the horizontal direction.

The battery pack may further include a module case having an inner space to accommodate the plurality of battery cells and having at least one venting hole formed on the upper portion thereof to communicate with the inner space, and the venting hole may be disposed between the adjacent reinforcement members.

At least a portion of the reinforcement member may be configured to protrude from the pack lid toward the battery cells.

The reinforcement member may include a protrusion configured to protrude from the pack lid, and a support portion extending from the protrusion to both sides thereof and supported on the pack lid.

The battery pack may further include an insulating coating layer formed on the outer surface of the reinforcement member.

The pack tray may include a venting portion configured to discharge the venting gas to the outside of the pack tray, and the reinforcement member may be provided to extend long toward the venting portion.

The gap between the adjacent reinforcement members may be configured to be reduced as it is closer to the venting portion.

The width of at least a portion of a reinforcement member coupled to a central portion of the pack lid, among the plurality of reinforcement members, may be configured to be greater than the width of a reinforcement member coupled to an edge of the pack lid.

In addition, a vehicle according to the present disclosure may include a battery pack according to the present disclosure.

### Advantageous Effects

According to one aspect of the present disclosure, it is possible to ensure safety and reliability by preventing thermal deformation of the pack lid due to high-temperature venting gas or sparks generated when a thermal event occurs in the battery cell or battery module.

In addition, according to one aspect of the present disclosure, if a thermal event occurs in the battery cell or battery module, it is possible to minimize thermal damage to other battery modules in the process of discharging high-temperature gas or the like generated from the battery module to the outside of the pack case, thereby preventing further chain ignition.

In addition, according to one aspect of the present disclosure, it is possible to stably secure a venting path between the battery module and the pack lid, so that venting gas generated when an abnormality of the battery module occurs may be smoothly discharged to the outside of the pack case.

Moreover, according to one aspect of the present disclosure, the performance of preventing thermal propagation between packs may be effectively secured.

As a result, it is possible to prevent or delay events, such as fire or explosion, due to thermal runaway of a battery pack including a plurality of battery modules or a device to which they are mounted.

In particular, in the case of electric vehicles, it is possible to obtain sufficient time for occupants to escape or drive by suppressing or delaying the propagation of thermal runaway between the battery cells or battery modules.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is an overall perspective view of a battery pack according to an embodiment of the present disclosure.
FIG. 2 is an exploded perspective view of a battery pack according to an embodiment of the present disclosure.
FIG. 3 is an exploded perspective view of a battery module included in a battery pack according to an embodiment of the present disclosure.
FIG. 4 is a diagram illustrating the direction in which venting gas is discharged in the case where a reinforcement member is provided in a battery pack according to an embodiment of the present disclosure. For example, FIG. 4 may be a diagram illustrating a cross-section taken along line I-I' in FIG. 1.
FIG. 5 is a diagram illustrating a comparative example showing the direction in which venting gas is discharged in the case where the battery pack according to an embodiment of the present disclosure does not include a reinforcement member. For example, FIG. 5 may be a diagram illustrating a cross-section taken along line I-I' in FIG. 1.
FIG. 6 is a diagram illustrating the inside of the battery pack when viewed from above, which shows the direction in which venting gas moves when a thermal event occurs in the battery module, according to an embodiment of the present disclosure.
FIG. 7 is an enlarged cross-sectional view of a portion of a battery pack according to an embodiment of the present disclosure.
FIG. 8 is a cross-sectional view of a battery pack according to an embodiment of the present disclosure. For example, FIG. 8 may be a diagram illustrating a cross-section taken along line II-II' in FIG. 1.
FIG. 9 is a cross-sectional view of a battery pack according to another embodiment of the present disclosure. For example, FIG. 9 may be a diagram illustrating a cross-section taken along line II-II' in FIG. 1.
FIG. 10 is a perspective view illustrating the top of a battery pack according to an embodiment of the present disclosure.
FIG. 11 is a perspective view illustrating the top of a battery pack according to another embodiment of the present disclosure.
FIG. 12 is a cross-sectional view of a battery pack according to another embodiment of the present disclosure. For example, FIG. 12 may be a diagram illustrating a cross-section taken along line II-II' in FIG. 1.
FIG. 13 is a perspective view schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Redundant descriptions of the substantially same or similar elements will be omitted from the respective embodiments, and a description will be made based on differences therebetween.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

For example, in an embodiment of the present disclosure, the ±X-axis directions shown in the drawing may indicate left and right directions, the ±Y-axis directions may indicate forward and backward directions perpendicular to the ±X-axis directions on the horizontal plane (the X-Y plane), and the ±Z-axis directions may indicate upward and downward directions (vertical direction) perpendicular to both the ±X-axis directions and the ±Y-axis directions.

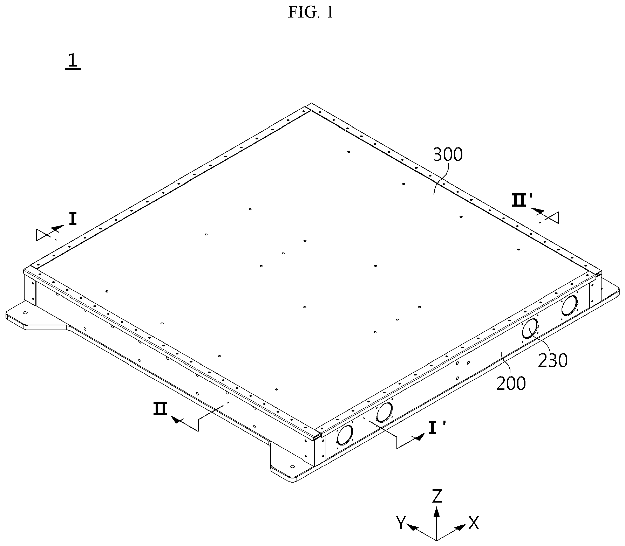

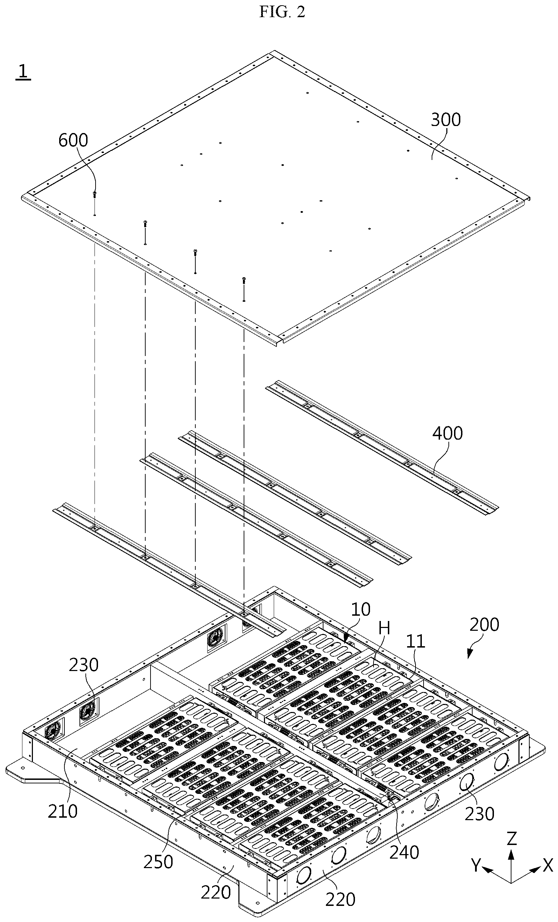

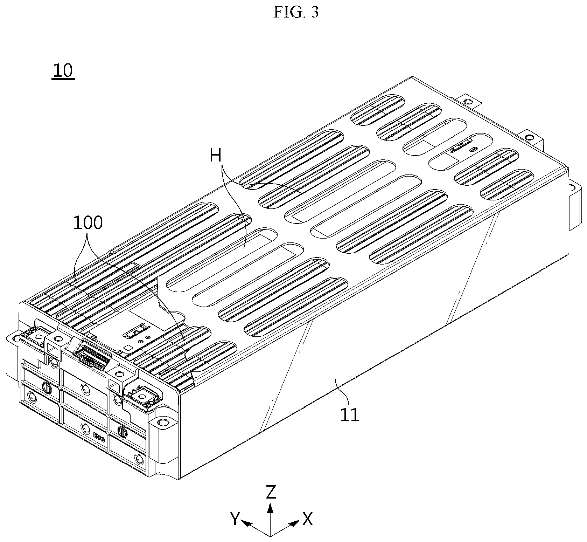

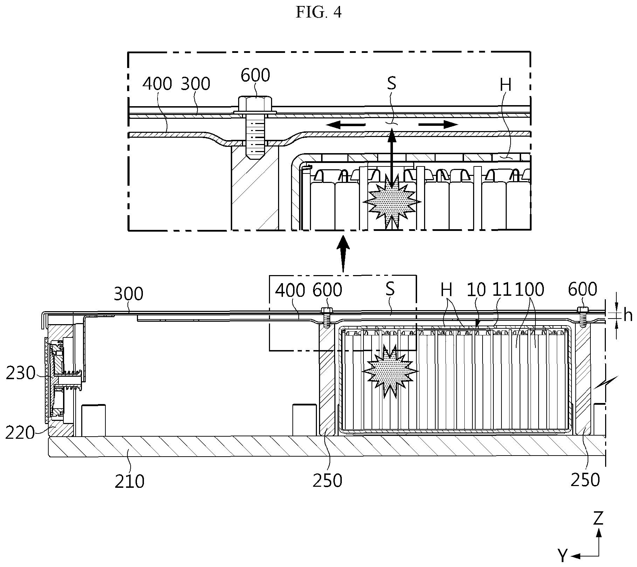

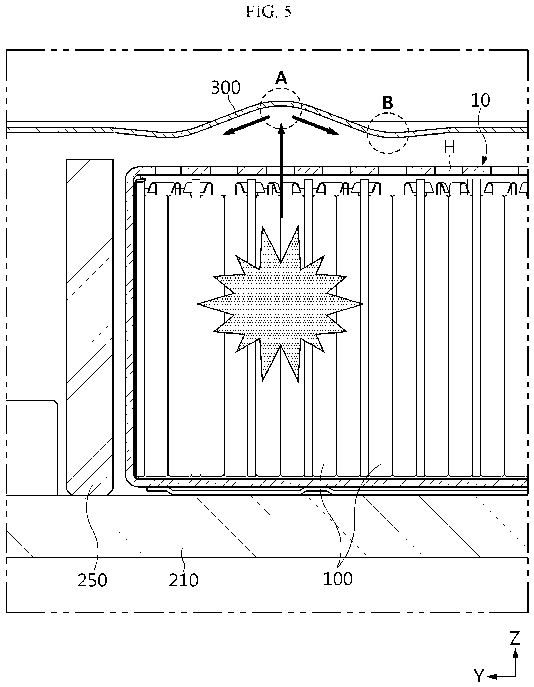

FIG. 1 is an overall perspective view of a battery pack according to an embodiment of the present disclosure, FIG. 2 is an exploded perspective view of a battery pack according to an embodiment of the present disclosure, and FIG. 3 is an exploded perspective view of a battery module included in a battery pack according to an embodiment of the present disclosure. In addition, FIG. 4 is a diagram illustrating the direction in which venting gas is discharged in the case where a reinforcement member is provided in a battery pack according to an embodiment of the present disclosure. For example, FIG. 4 may be a diagram illustrating a cross-section taken along line I-I' in FIG. 1. In addition, FIG. 5 is a diagram illustrating a comparative example showing the direction in which venting gas is discharged in the case where the battery pack according to an embodiment of the present disclosure does not include a reinforcement member. For example, FIG. 5 may be a diagram illustrating a cross-section taken along line I-I' in FIG. 1.

Referring to FIGS. 1 to 4, a battery pack 1 according to an embodiment of the present disclosure includes a battery cell 100, a pack tray 200, a pack lid 300, and a reinforcement member 400.

First, referring to FIG. 3, a plurality of battery cells 100 may be included. In addition, the plurality of battery cells 100, although not shown in the drawing, may include an electrode assembly, a cell case accommodating the electrode assembly, and an electrode lead that is connected to the electrode assembly and extends to the outside of the cell case, serving as an electrode terminal. In this case, the plurality of battery cells 100 may be electrically connected to each other.

The battery cell 100 may be a pouch-type secondary battery. The cell case of this pouch-type secondary battery may be configured in the form of a pouch in which a metal layer made of aluminum is interposed between polymer layers.

As shown in FIG. 2, the plurality of battery cells 100 may be arranged side by side in the forward and backward directions (±Y-axis directions) while standing vertically (in the ±Z-axis directions). In this case, sealing portions of each battery cell 100 may be directed in the left and right directions (±X-axis directions) and the upward and downward directions (±Z-axis directions), and a receiving portion thereof may be directed in the forward and backward directions (±Y-axis directions).

Meanwhile, the present disclosure is not limited to a specific type or form of the battery cell 100, and various battery cells 100 known at the time of filing of the present disclosure may be used to constitute the battery pack 1 of the present disclosure. Although this embodiment describes a pouch-type secondary battery that has high energy density and is easy to stack as shown in the drawing, a cylindrical or prismatic secondary battery may also be applied to the battery cell 100.

Referring to FIG. 2 or the like, The pack tray 200 may be configured to accommodate a plurality of battery cells 100. That is, the pack tray 200 may provide an accommodation space to accommodate a plurality of battery cells 100. The pack tray 200 may be configured to have an open top.

The pack tray 200 may be made of a material capable of securing mechanical rigidity, such as metal, such as steel or SUS, or plastic, or may include such a material in order to safely protect the battery cell 100 accommodated therein.

Referring to FIGS. 1 and 2, the pack lid 300 may be configured to cover the top of a plurality of battery cells 100. The pack lid 300 may be configured to cover the open top of the pack tray 200. The pack lid 300 may be coupled to the top of the pack tray 200 to constitute the upper surface of the pack tray 200. The pack lid 300 may protect the elements stored therein, such as the battery cell 100, and prevent venting gas and/or sparks emitted from the battery cell 100 from being discharged to the outside of the pack tray 200, in particular, to the upper side thereof.

In addition, referring to FIGS. 2 and 4, the battery pack 1 according to an embodiment of the present disclosure may further include a reinforcement member 400. The reinforcement member 400 may be located above the battery cell 100. The reinforcement member 400 may be coupled to the pack lid 300. In particular, the reinforcement member 400 may be coupled to the lower portion of the pack lid 300.

The reinforcement member 400 may be configured to suppress deformation of the pack lid 300. In particular, the reinforcement member 400 may be configured to prevent the pack lid 300 from being deformed by heat or pressure such as high-temperature venting gas or sparks generated from the battery cell 100 when a thermal event occurs. That is, the reinforcement member 400 may be configured to prevent thermal deformation of the pack lid 300. Furthermore, the reinforcement member 400 may be configured to suppress partial deformation of the pack lid 300.

As in the comparative example shown in FIG. 5, if the reinforcement member 400 is not provided, pressure and/or high heat such as venting gas or sparks discharged from the battery cell 100 may deform the shape of the pack lid 220 when a thermal event occurs in the battery cell 100. For example, a portion of the pack lid 300 located at the position where venting gas or sparks are discharged may swell upward (see the portion A in FIG. 5), and a portion adjacent thereto may sink downward (see the portion B in FIG. 5). As a result, the gap between the pack lid 300 and the battery cell 100 may be reduced at the position where the pack lid 300 sinks downward, so the venting path may not be secured, thereby hindering the venting gas from being discharged to the outside of the pack tray 200.

However, according to an embodiment of the present disclosure, since the pack lid 300 is provided with the reinforcement member 400, if high-temperature venting gas or the like is applied to the pack lid 300, the pack lid 300 may be prevented from being bent upward or downward in a specific portion thereof. That is, according to the above-implemented configuration of the present disclosure, the reinforcement member 400 may prevent or suppress the formation of bends in a specific portion of the pack lid 300.

As a result, a path through which the high-temperature venting gas generated from the battery cell 100 is discharged to the outside of the battery pack 1 may be secured in the event of an abnormality in the battery cell 100. Therefore, according to the above aspect of the present disclosure, thermal runaway propagation inside the battery pack 1 may be effectively prevented or delayed, thereby ensuring the safety and reliability of the battery pack 1.

Specifically, referring to FIG. 4, the pack lid 300 and the battery cell 100 or battery module 10 may be spaced a predetermined distance apart from each other, so that venting gas or sparks may move through the space. That is, a venting path S may be formed between the pack lid 300 and the battery cell 100 to allow venting gas to flow. Here, the reinforcement member 400 may be configured to maintain the height h of the venting path S. The height h of the venting path S indicates the length in the vertical direction (±Z-axis directions), and may indicate the vertical distance from the upper surface of the battery cell 100 or battery module 10 to the lower surface of the pack lid 300.

Accordingly, according to the above-implemented configuration of the present disclosure, since the gap h between the pack lid 300 and the battery cell 100 remains constant by the reinforcement member 400, the volume of the venting path S may be secured. As a result, venting gas or heat may be smoothly discharged to the outside of the battery pack 1 through the venting path S, thereby effectively suppressing or delaying thermal runaway between the battery cells 100. In addition, venting gas or sparks discharged upward from the battery cell 100 may be prevented from being reflected on the pack lid 300 and flowing back into the adjacent battery cells 100 or battery modules 10. Accordingly, the safety and reliability of the battery pack 1 may be guaranteed.

Meanwhile, the reinforcement member 400 may be made of a material with a lower thermal expansivity than the pack lid 300. The reinforcement member 400 may be made only of a material with a lower thermal expansivity than the pack lid 300. However, the difference in thermal expansivity between the reinforcement member 400 and the pack lid 300 may be configured to the extent that the reinforcement member 400 is not separated from the pack lid 300 when a thermal event occurs. According to the above-implemented configuration of the present disclosure, thermal deformation of the pack lid 300 due to high-temperature venting gas or sparks may be prevented in the event of an abnormality of the battery module 10 or battery cell 100, thereby minimizing heat propagation inside the battery pack 1.

The reinforcement member 400 may be made of a material with fire resistance. As a result, even if a thermal event occurs internally, the reinforcement member 400 may be prevented from melting or disappearing due to high-temperature heat such as flame. Therefore, even if flame occurs, the functions of preventing deformation of the pack lid 300 and maintaining the gap between the pack lid 300 and the battery cell 100 are ensured by the reinforcement member 400.

The reinforcement member 400 may be provided as a rigid body. The reinforcement member 400 may be made of a material with higher strength than the pack lid 300. Here, a rigid body is contrary to an elastic body, and for example, the reinforcement member 400 may be made of a material such as metal, such as SUS, or reinforced fiber plastic.

This may increase the mechanical rigidity of the reinforcement member 400, as well as preventing the pack lid 300 from being thermally deformed due to high-temperature venting gas therein, thereby preventing elastic deformation of the pack lid 300 even if an impact is applied from the outside.

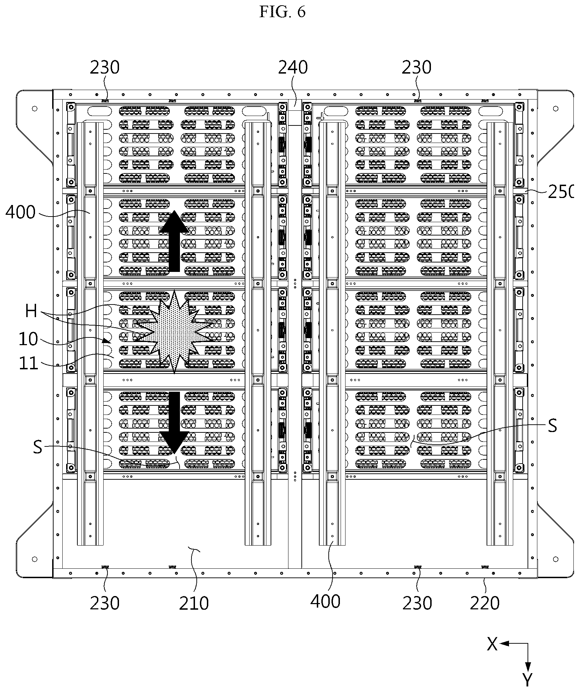

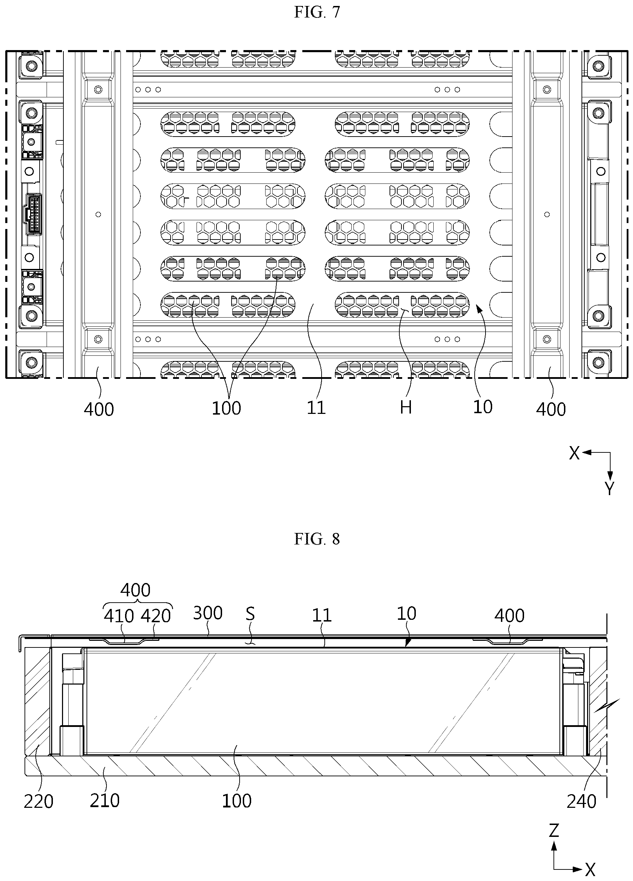

FIG. 6 is a diagram illustrating the inside of the battery pack when viewed from above, which shows the direction in which venting gas moves when a thermal event occurs in the battery module, according to an embodiment of the present disclosure. In addition, FIG. 7 is an enlarged cross-sectional view of a portion of a battery pack according to an embodiment of the present disclosure.

As described above, a plurality of battery cells 100 may be stacked side by side in the forward and backward directions (the ±Y-axis directions). In this case, as in the embodiment shown in FIG. 6, the reinforcement member 400 may be configured to extend long in the stacking direction of the plurality of battery cells 100. That is, the reinforcement member 400 may be configured to extend long in the forward and backward directions of the battery pack 1. The length of the reinforcement member 400 may be configured to be approximately the same as the length of the pack lid 300 in the forward and backward directions.

According to the above-implemented configuration of the present disclosure, the reinforcement member 400 may hold both ends of the pack lid 300 long in the longitudinal direction, thereby more effectively preventing the pack lid 300 from being deformed in the height direction by heat.

Meanwhile, a plurality of reinforcement members 400 may be provided. The plurality of reinforcement members 400 may be arranged to be spaced a predetermined distance apart from each other in the horizontal direction. In this case, a venting path S may be formed between adjacent reinforcement members 400. That is, the venting path S may be formed between the pack lid 300/reinforcement member 400 and the battery cell 100, so that venting gas or the like may flow therethrough when a thermal event occurs in any battery cell 100. The venting path S may also be configured to extend long in the forward and backward directions in which the reinforcement member 400 extends.

As a result, the reinforcement member 400 may guide the venting gas flowing through the venting path S in the forward and backward directions of the pack tray 200 to be smoothly discharged to the outside.

Meanwhile, referring to FIGS. 2 and 3, a plurality of battery cells 100 may be modularized into one or more battery modules 10. That is, a battery pack 1 according to the present disclosure may include one or more battery modules 10. In addition, a plurality of battery cells 100 may be included as elements of one or more battery modules 10. In this case, the plurality of battery cells 100 included inside the battery module 10 may be electrically connected to each other.

Furthermore, a plurality of battery modules 10 may be provided inside the pack tray 200. That is, the battery pack 1 according to the present disclosure may include a plurality of battery modules 10, and the plurality of battery cells 100 included in the battery pack 1 may be divided and included in the plurality of battery modules 10.

In particular, the battery pack 1 according to the present disclosure may include a module case 11. The module case 11 may be configured to have an inner space formed therein to accommodate at least some of the plurality of battery cells 100. In particular, the module case 11 may be included in each battery module 10, and may group the plurality of battery cells 100 into several battery modules 10 and act as a boundary for physically defining the inner space of each battery module 10.

In addition, although not shown in the drawing, the battery module 10 may include a bus-bar assembly and/or a module terminal electrically connected to the plurality of battery cells 100 accommodated therein.

The battery module 10 may include a venting hole H. The venting hole H may be configured to discharge gas generated from the battery cell 100 stored inside the module case 11 to the outside of the module case 11.

Specifically, the venting hole H may be provided in the module case 11 to enable directional venting in a specific direction. For example, as shown in FIG. 7, the venting hole H may be provided at the top of the module case 11. According to this implemented configuration, venting gas and/or sparks may be guided to be discharged to the upper side of the battery module 10.

A plurality of venting holes H may be provided. The venting holes H may be arranged in a row in the forward and backward directions or the left and right directions. For example, as shown in FIG. 7, the venting holes H may be arranged in a row in the longitudinal direction (the left and right directions) of the battery cell 100 to form one row. A plurality of rows described above may be arranged in the stacking direction (the forward and backward directions) of the battery cell 100.

In addition, the venting holes H may be disposed between adjacent reinforcement members 400 among the plurality of reinforcement members 400. All of the plurality of venting holes H may be disposed between adjacent reinforcement members 400, or, as shown in FIG. 7, some of the plurality of venting holes H may be disposed between adjacent reinforcement members 400. That is, it may be configured such that portions where the reinforcement member 400 overlaps the venting holes H are minimized when the battery pack 1 is viewed from above.

According to the above-implemented configuration of the present disclosure, it is possible to prevent the flow of venting gas discharged upward from being interrupted by the reinforcement member 400. As a result, venting gas or the like may smoothly flow into the venting path S and then be discharged to the outside of the battery pack 1.

In addition, the reinforcement member 400 may be provided to be spaced a predetermined distance apart from the upper surface of the battery cell 100 or battery module 10 in the vertical direction. As a result, even if the reinforcement member 400 overlaps the venting holes H, venting gas or the like may be smoothly discharged to the upper side through the venting holes H and then flow into the venting path S.

The location or shape of the reinforcement member 400 may be configured differently depending on the location where the venting hole H is formed, and the area or number of the reinforcement members 400 may be adjusted depending on the area or number of the venting holes H.

FIG. 8 is a cross-sectional view of a battery pack according to an embodiment of the present disclosure. For example, FIG. 8 may be a diagram illustrating a cross-section taken along line II-II' in FIG. 1.

Referring to FIG. 8, at least a portion of the reinforcement member 400 may be configured to protrude from the pack lid 300 toward the battery cell 100. That is, at least a portion of the reinforcement member 400 may be configured to protrude downward from the pack lid 300.

Specifically, the reinforcement member 400 may include a protrusion 410 and a support portion 420. The protrusion 410 may be configured to protrude from the pack lid 300. The protrusion 410 may be provided in the central portion of the reinforcement member 400. In this case, the lower surface of the protrusion 410 may be configured to be flat.

According to the above-implemented configuration of the present disclosure, when the pack lid 300 is about to be deformed by heat due to a thermal event, the lower surface of the protrusion 410 may press the upper surface of the battery cell 100 or module case 11 to prevent a portion of the pack lid 300 from moving downward. In addition, even if an impact is applied from the outside, the lower surface of the protrusion 410 may be supported on the upper surface of the battery cell 100 or module case 11. As a result, according to the above-implemented configuration of the present disclosure, it is possible to reliably prevent deformation of the pack lid 300, thereby securing the venting path S.

The support portions 420 may be configured to extend from the protrusion 410 to both sides thereof. The support portions 420 may be configured by bending both ends of the reinforcement member 400. The support portion 420 may be provided to be supported in contact with the pack lid 300. The support portion 420 may be in surface-contact with the lower surface of the pack lid 300. To this end, the support portion 420 may have an outer surface parallel to the lower surface of the pack lid 300. In this case, it is desirable to secure the contact area between the pack lid 300 and the support portion 420. According to the above-implemented configuration of the present disclosure, the support portion 420 may stably fix the pack lid 300 and the reinforcement member 400. Therefore, the pack lid 300 may not be deformed by external vibration, impact, heat, or the like and remain in a stable shape and position.

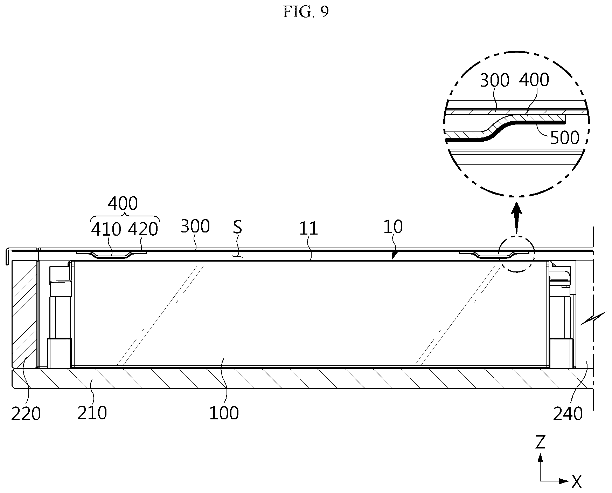

FIG. 9 is a cross-sectional view of a battery pack according to another embodiment of the present disclosure. For example, FIG. 9 may be a diagram illustrating a cross-section taken along line II-II' in FIG. 1.

Meanwhile, referring to FIG. 9, a battery pack 1 according to another embodiment of the present disclosure may include a reinforcement member 400 on which an insulating coating layer 500 is formed. The insulating coating layer 500 may be formed on the outer surface of the reinforcement member 400. The insulating coating layer 500 may be formed on the exposed portion of the reinforcement member 400 in the pack lid 300. That is, the insulating coating layer 500 may be formed on the remaining surfaces of the reinforcement member 400, excluding the surface where the reinforcement member 400 is in contact with the pack lid 300. For example, the insulating coating layer 500 may be provided to surround the lower surfaces of the protrusion 410 and the support portion 420.

The insulating coating layer 500 may be configured to prevent heat conduction of the reinforcement member 400 while electrically insulating the same. To this end, the insulating coating layer 500 may be made of a material such as polyurethane or silicone. According to the above-implemented configuration of the present disclosure, the insulating coating layer 500 may ensure the insulation and/or heat-conduction prevention effect in the area where the reinforcement member 400 is exposed to venting gas or sparks.

The insulating coating layer 500 may be a coating layer formed by directly applying a foaming material to the outer surface of the reinforcement member 400 after assembling the reinforcement member 400 to the pack lid 300. According to the above-implemented configuration of the present disclosure, it is possible to easily cover the outer surface of the reinforcement member 400, compared to a separate insulating sheet to be attached thereto. In addition, the process of separately manufacturing an insulating member depending on the size or shape of the outer surface of the reinforcement member 400 may be omitted, thereby reducing cost and time for manufacturing the battery pack 1.

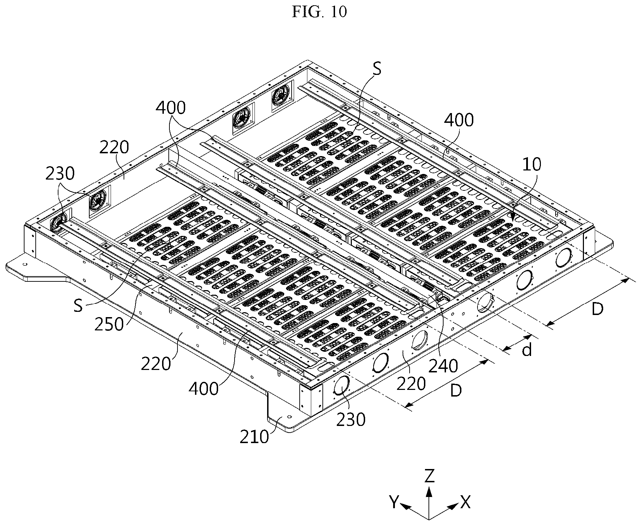

FIG. 10 is a perspective view illustrating the top of a battery pack according to an embodiment of the present disclosure.

Meanwhile, referring to FIG. 10, a pack tray 200 according to an embodiment of the present disclosure may include a base frame 210 and a side frame 220.

The base frame 210 may constitute the lower surface of the pack tray 200 and may be provided in the form of a square plate. In addition, the base frame 210 may be configured such that a plurality of battery cells 100 is seated on the upper surface thereof. Furthermore, the base frame 210 may have a flat upper surface so that a plurality of battery cells 100 or module cases 11 may be stably seated thereon.

The side frame 220 may extend upwards from respective edges of the base frame 210. The side frame 220 may be configured to have a plurality of unit walls to surround the plurality of battery cells 100 or battery modules 10. More specifically, the side frame 220 may include a rear wall located at the end of the base frame 210 in the +Y-axis direction, a right wall located at the end thereof in the +X-axis direction, a front wall located at the end thereof in the -Y-axis direction, and a left wall located at the end thereof in the -X-axis direction, thereby constituting the side of the pack tray 200.

In addition, the pack tray 200 may be provided with a venting portion 230. The venting portion 230 may be configured to discharge gas generated from the battery cell 100 stored therein to the outside of the pack tray 200. The venting portion 230 may be provided in the form of a hole communicating the inside and outside of the pack tray 200 with each other. Alternatively, the venting portion 230 may be provided as a venting device that is configured to be mounted in a hole of the pack tray 200 and operates when venting gas is generated inside the pack tray 200.

The venting portion 230 may be provided on the side of the pack tray 200, that is, on the side frame 220. A plurality of venting portions 230 may be provided. The venting portion 230 may be located on at least some of the unit walls of the side frame 220. In addition, the venting portion 230 may be formed separately on two or more unit walls, or two or more venting portions 230 may be formed on one unit wall. For example, referring to FIG. 10, a plurality of venting portions 230 may be provided on the front wall and the rear wall, respectively. In addition, the plurality of venting portions 230 may be provided to be symmetrical to each other with respect to the central axis of the side frame 220.

According to the above-implemented configuration of the present disclosure, since high-temperature gas or the like may be discharged in both directions of the pack tray 200 in the event of an abnormality of the battery cell 100, gas may be more quickly and easily discharged to the outside of the pack tray 200.

Meanwhile, the installation number or locations of the venting portions 230 described with reference to the embodiment in FIG. 10 are only an example, and the installation number or locations thereof may vary.

Meanwhile, the pack tray 200 may further include a center beam 240 and a cross-beam 250. The center beam 240 and the cross-beam 250 may be provided to separate a plurality of battery cells 100 or battery modules 10. The center beam 240 and the cross-beam 250 may be provided between the plurality of battery cells 100 and the side frame 220 provided with the venting portion 230. For example, the center beam 240 may be configured in the form of a partition extending long in the forward and backward directions and interposed between the battery modules 10 arranged adjacently in the left and right directions. In addition, the cross-beam 250 may be configured in the form of a partition extending long in the left and right directions and interposed between the battery modules 10 arranged adjacently in the forward and backward directions.

According to this implemented configuration, it is possible to prevent heat or flame from directly transferring between the cell assemblies or battery modules 10 stored in different spaces separated by the center beam 240 and the cross-beam 250.

In addition, the center beam 240 and the cross-beam 250 may be provided to be spaced a predetermined distance apart from the pack lid 300. That is, the center beam 240 and the cross-beam 250 may be configured so that at least a portion of their upper ends is spaced a predetermined distance apart from the lower surface of the pack lid 300, instead of being in contact therewith.

Meanwhile, a plurality of reinforcement members 400 may be provided to be symmetrical about the center beam 240. A plurality of reinforcement members 400 may be provided between the center beam 240 and the side frame 220. For example, as in the embodiment shown in FIG. 10, two reinforcement members 400 may be provided between the center beam 240 and both side frames 220, respectively. These two reinforcement members 400 may be arranged to be spaced apart by a distance D, and a venting path S may be formed between the two reinforcement members 400.

The reinforcement member 400 may be provided to extend long toward the venting portion 230. Accordingly, venting gas moving through the venting path S between the two reinforcement members 400 may head to the venting portion 230. In this case, according to an embodiment of the present disclosure, the two reinforcement members 400 are provided parallel to each other so that the distance D between the reinforcement members 400 may remain constant.

According to the above-implemented configuration of the present disclosure, when a thermal event occurs in the battery cell 100, the reinforcement members 400 may guide the venting gas toward the venting portion 230 to quickly discharge the venting gas to the outside of the pack tray 200. As a result, the internal pressure inside the pack tray 200 may be prevented from increasing, and further chain ignition of other battery cells 100 may be prevented.

A plurality of reinforcement members 400 may be provided at the central portion of the pack lid 300 and at the edges of the pack lid 300. As in the embodiment shown in FIG. 10, two reinforcement members 400 may be provided on both sides of the center beam 240 of the pack lid 300. In addition, the two reinforcement members 400 may be provided on both edges of the pack lid 300, respectively.

In this case, the gap d between the two reinforcement members 400 coupled to the central portion of the pack lid 300 may be smaller than the gap D between one of the reinforcement members 400 and the reinforcement member 400 coupled to the edge of the pack lid 300. That is, the density of the reinforcement members 400 provided in the central portion of the pack lid 300 may be higher than that in the edges of the pack lid 300.

The central portion of the pack lid 300 is more likely to be thermally deformed than the edges of the pack lid 300, and according to the above-implemented configuration of the present disclosure, the reinforcement members 400 arranged at narrow intervals in the central portion of the pack lid 300 may more stably fix the pack lid 300. As a result, the central portion of the pack lid 300 may be prevented from lifting off from the pack tray 200.

Meanwhile, referring to FIGS. 2, 4, and 10, the reinforcement member 400 may be coupled to the pack lid 300. In particular, the reinforcement member 400 may be provided to be coupled to the lower surface of the pack lid 300. The reinforcement member 400 may be coupled and fixed to the pack lid 300 by a coupling member 600 such as a bolt. In this case, as shown in FIG. 10, the reinforcement member 400 may be configured to be seated on the cross-beam 250 extending long in the left and right directions. Specifically, the reinforcement member 400 may be seated on the cross-beam 250, and the pack lid 300 may be seated on the reinforcement member 400, so that the pack lid 300, the reinforcement member 400, and the cross-beam 250 may be coupled to each other by a coupling member 600 such as a bolt at the top of the pack lid 300.

According to the above-implemented configuration of the present disclosure, a coupling and fixing configuration between the reinforcement member 400 and the pack lid 300 may be obtained in a simple structure. Moreover, according to the above-implemented configuration of the present disclosure, since the reinforcement member 400 is premanufactured to be seated on the cross-beam 250, if the pack lid 300 is coupled to the top of the pack tray 200, the reinforcement member 400 may be automatically installed on the cross-beam 250. Therefore, it is possible to reduce time and cost in manufacturing the battery pack 1, thereby improving productivity. In addition, since the reinforcement member 400 is stably fixed to the cross-beam 250, the rigidity of the reinforcement member 400 may be further secured.

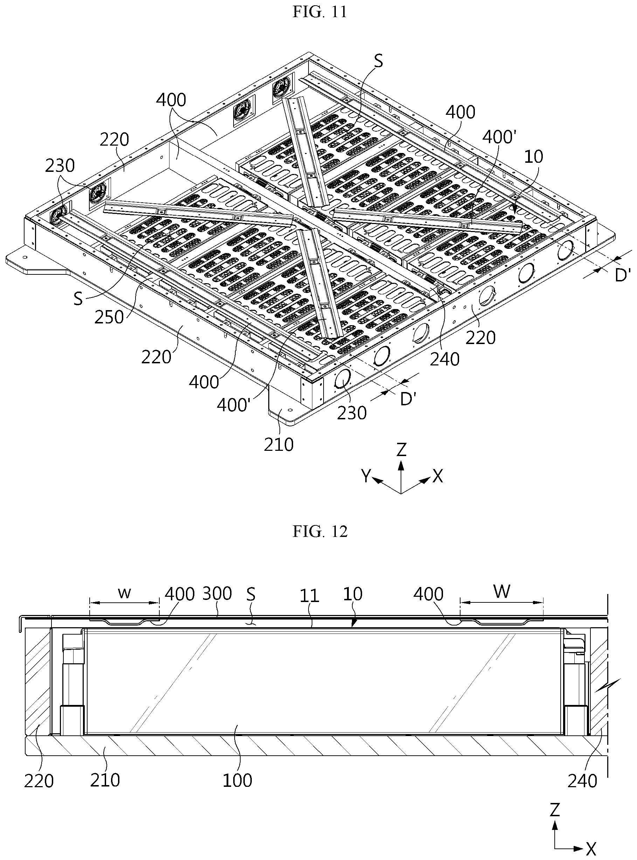

FIG. 11 is a perspective view illustrating the top of a battery pack according to another embodiment of the present disclosure.

According to another embodiment of the present disclosure, a reinforcement member 400' located in the central portion of the pack lid 300 may be configured to have its central portion bent. The reinforcement member 400' may be configured in a diagonal shape. Specifically, the gap D' between two adjacent reinforcement members 400 and 400' may be configured to be reduced as it is closer to the venting portion 230. Here, the reinforcement members 400 and 400' may indicate reinforcement members 400 and 400' provided between the center beam 240 and the side frame 220. That is, in the above embodiment, the width D' of the venting path S may be reduced as it is closer to the venting portion 230.

According to the above-implemented configuration of the present disclosure, the reinforcement member 400 and 400' may guide venting gas or the like in the venting path S toward the venting portion 230. Accordingly, venting gas or sparks may be smoothly discharged to the outside of the battery pack 1, thereby suppressing or preventing thermal runaway between the battery modules 10.

FIG. 12 is a cross-sectional view of a battery pack according to another embodiment of the present disclosure. For example, FIG. 12 may be a diagram illustrating a cross-section taken along line II-II' in FIG. 1.

According to another embodiment of the present disclosure, the width W of at least a portion of a reinforcement member 400 coupled to the central portion of the pack lid 300, among the plurality of reinforcement members 400, may be configured to be greater than the width w of a reinforcement member 400 coupled to the edge of the pack lid 300. In particular, the width of the central portion of the reinforcement member 400 coupled to the central portion of the pack lid 300 may be greater than those of other portions. In this case, as the support portion 420 of the reinforcement member 400 is wider, upward deformation of the pack lid 300 may be prevented.

Alternatively, unlike the present embodiment, the height of at least a portion of the reinforcement member 400 coupled to the central portion of the pack lid 300 may be configured to be greater than the height of the reinforcement member 400 coupled to the edge of the pack lid 300.

According to the above-implemented configuration of the present disclosure, the reinforcement member 400 provided in the central portion of the pack lid 300 and having a greater width may more stably fix the central portion of the pack lid 300. As a result, it is possible to more effectively prevent the central portion of the pack lid 300 from lifting off from the pack tray 200.

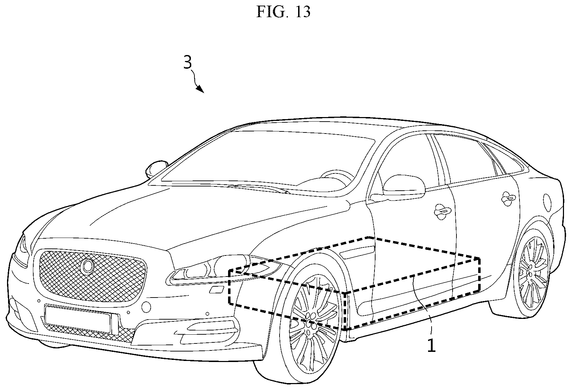

FIG. 13 is a perspective view schematically illustrating a vehicle including a battery pack according to an embodiment of the present disclosure.

Referring to FIG. 13, a vehicle 3 according to an embodiment of the present disclosure may include one or more battery packs 1 according to the above-described embodiments. The vehicle 3 according to the present disclosure may be, for example, an electric vehicle, a hybrid vehicle, or a plug-in hybrid vehicle. The vehicle 3 includes a fourwheeled vehicle and a two-wheeled vehicle. The vehicle 3 may drive by receiving power from the battery pack 1 or battery module 10 according to an embodiment of the present disclosure.

Although the preferred embodiments of the present disclosure have been illustrated and described above, the present disclosure is not limited to the specific embodiments described above, and it should be noted that there may be various modifications by those skilled in the art to which the present disclosure pertains without departing from the scope of the present disclosure as claimed in the claims and that these modifications should not be understood respectively from the technical ideas or perspectives of the present disclosure.

## Claims

1. A battery pack comprising:
a plurality of battery cells;
a pack tray having an open top and configured to accommodate the plurality of battery cells;
a pack lid configured to cover the open top of the pack tray; and
a reinforcement member coupled to the pack lid and configured to suppress deformation of the pack lid.

2. The battery pack according to claim 1,
wherein a venting path is formed between the pack lid and the battery cells to allow venting gas generated from the battery cell to flow therethrough, and
wherein the reinforcement member is configured to maintain the height of the venting path.

3. The battery pack according to claim 1,
wherein the reinforcement member is made of a material with a lower thermal expansivity than the pack lid.

4. The battery pack according to claim 1,
wherein the reinforcement member is configured to extend long in the stacking direction of the plurality of battery cells.

5. The battery pack according to claim 1,
wherein a plurality of reinforcement members is provided to be spaced a predetermined distance apart from each other in the horizontal direction.

6. The battery pack according to claim 5,
further comprising a module case having an inner space to accommodate the plurality of battery cells and having at least one venting hole formed on the upper portion thereof to communicate with the inner space,
wherein the venting hole is disposed between the adjacent reinforcement members.

7. The battery pack according to claim 1,
wherein at least a portion of the reinforcement member is configured to protrude from the pack lid toward the battery cells.

8. The battery pack according to claim 7,
wherein the reinforcement member comprises
a protrusion configured to protrude from the pack lid, and
a support portion extending from the protrusion to both sides thereof and supported on the pack lid.

9. The battery pack according to claim 1,
further comprising an insulating coating layer formed on the outer surface of the reinforcement member.

10. The battery pack according to claim 5,
wherein the pack tray comprises
a venting portion configured to discharge the venting gas to the outside of the pack tray, and
wherein the reinforcement member is provided to extend long toward the venting portion.

11. The battery pack according to claim 10,
wherein the gap between the adjacent reinforcement members is configured to be reduced as it is closer to the venting portion.

12. The battery pack according to claim 5,
wherein the width of at least a portion of a reinforcement member coupled to a central portion of the pack lid, among the plurality of reinforcement members, is configured to be greater than the width of a reinforcement member coupled to an edge of the pack lid.

13. A vehicle including the battery pack according to any one of claims 1 to 12.
